# EUROPÄISCHE PATENTSCHRIFT

(11) **EP 4 360 927 B1**
(45) Veröffentlichungstag und Bekanntmachung des Hinweises auf die Patenterteilung: **05.03.2025**
(21) Anmeldenummer: 23203980.0
(22) Anmeldetag: 17.10.2023
(51) Int. Cl.: B60J 7/06

(54) **FAHRZEUGDACH MIT EINEM ÖFFNUNGSFÄHIGEN FALTDACH MIT SPANNSEILSYSTEM**
VEHICLE ROOF WITH AN OPENABLE COLLAPSIBLE ROOF WITH TENSION CORD SYSTEM
TOIT DE VÉHICULE AVEC TOIT PLIANT OUVRANT AVEC SYSTÈME DE CÂBLE TENDEUR

(30) Priorität: 25.10.2022 DE 102022211317
(43) Veröffentlichungstag der Anmeldung: 01.05.2024
(73) Patentinhaber: Magna Car Top Systems GmbH, 74321 Bietigheim-Bissingen (DE)
(72) Erfinder: SCHUMACHER, Thorsten, 25495 Kummerfeld (DE)
(74) Vertreter: Reuter, Silke Beatrix

(56) Entgegenhaltungen:
- DE-C1- 19 943 771
- GB-A- 340 183

## Beschreibung

Die Erfindung bezieht sich auf ein Fahrzeugdach mit einem öffnungsfähigen Faltdach mit Spannseilsystem nach dem Oberbegriff des Anspruches 1.

Kraftfahrzeuge mit Fahrzeugdächern, die ein öffnungsfähiges Faltdach besitzen, können Spannseile enthalten, die in der geschlossenen Position an den seitlichen in Längsrichtung des Kraftfahrzeugs verlaufenden Randbereichen des Faltdachs eine Spannung auf den Verdeckbezug ausüben und somit eine Abdichtung gegen die Fahrzeugkarosserie im Dachbereich erzielen. Hierfür sind die Spannseile in seitlichen Taschen des Verdeckbezugs angeordnet und endseitig an einem vorderen Dachteil und an einem hinteren Dachteil karosseriefest angebunden.

Eine Ausführung eines Spannseilsystems mit einer fixen Spannseillänge führt zu geringen Schließkräften, allerdings muss die Spannseillänge sehr genau abgestimmt sein, da eine nachträgliche Einstellung und somit Anpassung der Seilspannung nicht möglich ist.

In der DE 37 23 598 C2 wird ein Fahrzeugdach für ein Kraftfahrzeug beschrieben, das als Faltschiebedach ausgeführt ist und mehrere, in seitlichen Dachführungen längsverschiebliche Spriegel aufweist, welche einen Verdeckbezugstoff tragen. Zum Öffnen des Faltschiebedachs werden die Spriegel einschließlich einer vorne liegenden Dachkappe, an der der Verdeckbezugstoff befestigt ist, in den seitlichen Führungen nach hinten verschoben, wodurch der Verdeckbezugstoff in Falten geworfen wird. Für einen definierten Faltenwurf sowie zum Spannen des Verdeckbezugstoffes in der geschlossenen Dachposition ist im linken und rechten Dachseitenbereich jeweils ein Spannseil durch den Verdeckbezugstoff geführt, das von einem Federelement kraftbeaufschlagt ist, um eine definierte Seilspannung zu erzeugen. Das Federelement ist als Schraubenfeder ausgeführt, die in Verlängerung des Spannseils angeordnet ist. Der Nachteil eines Spannseilsystems mit Federelement ist die Reduktion der Gesamtsteifigkeit des kompletten Systems.

Des Weiteren zeigt die EP 2 572 913 B1 ein Faltdach mit einem Spannseilsystem, wobei ein Endbereich des Spannseils über eine Spannfeder kraftbeaufschlagt an einem karosseriefesten Bauteil gehalten ist. Das Spannseilsystem umfasst weiterhin einen Spannhebel zur Einstellung der Spannkraft und einen Anschlag, der die Verstellung des Spannhebels begrenzt.

Aus der GB 340,183 A ist ein Fahrzeug mit einem öffenbaren als Plane ausgeführtem Verdeck bekannt. Die Ränder der Plane sind derart ausgeführt, dass sie ein Spannseil aufnehmen, wodurch im geschlossenen Zustand eine dichtende Anlage der Plane an den umlaufenden Dachrändern gewährleistet ist. Ein Ende des Spannseils ist karosseriefest an einem ersten Dachende angebunden, das andere Ende ist mittels einer Hebelvorrichtung am gegenüberliegenden Dachende festlegbar. Eine Längenänderung des Kabels kann über die Hebelvorrichtung ausgeglichen werden. Hierfür ist das Spannseil an einem verlagerbaren Hebel der Hebelvorrichtung angebunden. Der Hebel weist einen Querbolzen auf. An dem Dachende ist ein Rastbeschlag angeordnet, der zur rastenden Aufnahme des Bolzens mit nach obenstehend gebogenen hakenförmigen Rastelementen ausgeführt ist.

Der Erfindung liegt die Aufgabe zugrunde, mit einfachen konstruktiven Maßnahmen ein Fahrzeugdach mit einem öffnungsfähigen Faltdach so auszubilden, dass das Faltdach in variabler Weise im geschlossenen Zustand unter Spannung gesetzt werden kann, und wobei das Problem von Toleranzen in Bezug auf die Spannseillänge jederzeit eingestellt und einfach ausgeglichen werden kann.

Diese Aufgabe wird erfindungsgemäß mit den Merkmalen des Anspruches 1 gelöst. Die Unteransprüche geben zweckmäßige Weiterbildungen an.

Um das Faltdach in variabler Weise im geschlossenen Zustand unter Spannung zu setzen, wobei das Problem von Toleranzen in Bezug auf die Spannseillänge jederzeit eingestellt und einfach ausgeglichen werden kann ist erfindungsgemäß ein Rastelement relativ zu einer karosseriefest angebundenen Rastbasis nur in einer Längsrichtung verstellbar. Die Längsrichtung ist hierbei die Fahrzeuglängsrichtung. Rastbasis und Rastelement sind dabei derart verstellbar zueinander ausgeführt, dass das Rastelements in Bezug auf die Rastbasis nur in Längsrichtung nach hinten verstellbar ist, und dass die Verstellung eine mehrstufig einstellbare Verrastung ist, die durch eine Rastverzahnung am Rastelement und korrespondierende Federzungen an der Rastbasis ausgebildet wird.

Die Verstellung nur in Längsrichtung nach hinten entspricht ausschließlich einer Verschiebebewegung, wobei das Rastelement in Längsrichtung nach hinten verschiebbar zu der Rastbasis angeordnet ist.

Das Fahrzeugdach weist ein verstellbares Faltdach auf, das zwischen einer geschlossenen Position, in der eine Öffnung im Fahrzeugdach verdeckt ist, und einer geöffneten Position verstellbar ist, in der die Öffnung freiliegt. Das Faltdach ist beispielsweise als ein Faltschiebedach ausgeführt, das zur Überführung zwischen Schließ- und Öffnungsposition eine Verschiebebewegung entlang der Fahrzeuglängsachse ausführt. Zu diesem Zweck können seitliche, oben liegende Führungsschienen, die aufbau- bzw. karosseriefest gehalten sind, im Fahrzeugdach vorgesehen sein, die die zwischenliegende Öffnung begrenzen und in denen das Faltschiebedach entlang der Längsachse verschiebbar ist.

Das Faltdach weist einen Verdeckbezugstoff sowie Gestängeteile auf, welche Träger des Verdeckbezugstoffes ist. Zum Überführen zwischen der Schließ- und Öffnungsposition werden die Gestängeteile einschließlich Verdeckbezugstoff verstellt. Im Falle eines Faltschiebedaches umfassen die Gestängeteile ein vorderes Dachteil und einen oder mehrere dahinter liegende Dachspriegel, die sich in Fahrzeugquerrichtung zwischen den seitlichen Führungsschienen erstrecken und die mit dem Verdeckbezugstoff gekoppelt sind.

Die Dachspriegel umfassen einen vorderen Dachspriegel, einen oder mehrere mittlere Dachspriegel und einen hinteren Dachspriegel.

Das vordere Dachteil der Gestängeteile bildet eine Dachkappe, an der der Verdeckbezugstoff angebunden ist. Bei geöffnetem Fahrzeugdach legt sich der Verdeckbezugstoff in Falten.

Um den Verdeckbezugstoff in geschlossenem Zustand des Faltdaches unter Spannung zu setzen, ist ein Spannseil vorgesehen, das mit dem Verdeckbezugstoff des Faltdaches verbunden ist. Vorteilhafterweise befindet sich jeweils ein Spannseil im linken und rechten Dachseitenbereich und verläuft in Fahrzeuglängsrichtung, wobei jedes Spannseil mit dem Verdeckbezugstoff verbunden ist.

Das Spannseil erstreckt sich insbesondere zwischen der vorne liegenden Dachkappe des Faltdaches und einem aufbau- bzw. karosseriefesten hinteren Dachteil, an dem im geöffneten Zustand das Faltdach liegt.

Erfindungsgemäß ist das Spannseil in einer montierten Situation des Faltdachs mittels des Spannseilsystems kraftgesteuert einstellbar. Hierdurch wird das Problem der Toleranzen bei einer fixen Spannseillänge umgangen.

Das Rastelement ist in Bezug auf die Rastbasis verstellbar ausgebildet, um die Spannung im Spannseil bei geschlossenem Fahrzeugdach exakt einstellen zu können. Das Rastelement ist in der eingestellten Relativposition an der Rastbasis formschlüssig gehalten. Diese formschlüssige Verrastung kann nur über eine Zugkrafteinleitung auf das an dem Rastelement angebundenem Spannseilende aufgehoben werden, wodurch eine Erhöhung der Seilspannung durch Verstellung des Rastelements relativ zu der Rastbasis in Längsrichtung nach hinten erfolgt. In dieser verstellten Position verrastet das Rastelement formschlüssig an der Rastbasis.

Durch eine enge Rastteilung kann vorteilhafterweise eine genaue Einstellung der Spannseillänge erfolgen.

Vorteilhafterweise wird das karosseriefeste hintere Dachteil über einen hinteren Dachspriegel mit Konturausschnitt realisiert. Hierdurch kann die Funktion des

Spannseils beim automatisierten Kleben eines Umbugs des Verdeckstoffs realisiert werden.

Das Spannseil ist vorteilhafterweise in einer sich in Fahrzeuglängsrichtung erstreckenden Dichtungsnut geführt, die an den seitlichen Führungsschienen, in denen die Kinematikbauteile des Faltdaches verschieblich geführt sind, gehalten sind.

Weitere Vorteile und zweckmäßige Ausführungen sind den weiteren Ansprüchen, der Figurenbeschreibung und den Zeichnungen zu entnehmen. Es zeigen:
- Fig. 1: eine Ansicht von unten auf ein Fahrzeugdach mit einem öffnungsfähigen Faltdach, dargestellt im geschlossenen Zustand,
- Fig. 2: eine perspektivische dreidimensionale Ansicht auf ein Spannseilsystem mit einem Spannseil zum Spannen des Verdeckbezugstoffs des Faltdaches, mit einem karosseriefesten Bauteil, einer Rastbasis und einem Rastelement,
- Fig. 3: eine perspektivische dreidimensionale Ansicht auf das Rastelement als Einzelteil,
- Fig. 4: eine perspektivische dreidimensionale Ansicht auf die Rastbasis als Einzelteil; und
- Fig. 5: eine Ansicht auf das Spannseilsystem in der montierten Situation ohne Spannseil.

In den Figuren sind gleiche Bauteile mit gleichen Bezugszeichen versehen.

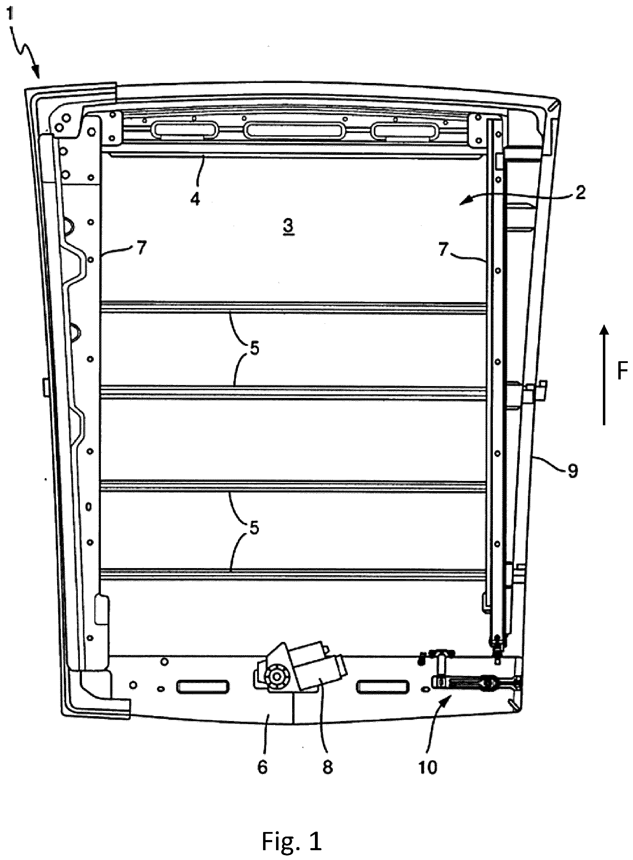

Fig. 1 zeigt in einer Ansicht von unten ein Fahrzeugdach 1 mit einem verstellbaren Faltdach 2, das einen Verdeckbezugstoff 3 sowie mehrere Gestängeteile 4, 5 umfasst, welche den Verdeckbezugstoff 3 tragen. Bei den Gestängeteilen handelt es sich um eine vordere Dachkappe 4, die im geschlossenen Dachzustand in Fahrzeuglängsrichtung vorne an einem vorderen Dachrahmen 7a liegt, sowie mehrere, sich in Querrichtung erstreckende Dachspriegel 5, die zwischen der vorderen Dachkappe 4 und einem hinteren Dachteil 6 angeordnet sind, welches fest bzw. unbeweglich am Fahrzeugaufbau bzw. der -karosserie angeordnet ist. Die vordere Dachkappe 4 und die Dachspriegel 5 sind in seitlichen, aufbauseitigen Führungsschienen 7 geführt und können in den Führungsschienen 7 in Fahrzeuglängsrichtung nach hinten bzw. nach vorne verschoben werden, um den Öffnungs- bzw. Schließvorgang durchzuführen.

Die Verstellbewegung des Faltdaches 2 erfolgt mittels einer Antriebseinrichtung 8, bei der es sich um einen Elektromotor handelt. Zum Öffnen des Faltdaches 2, das als Faltschiebedach ausgeführt ist, werden die Gestängeteile 4, 5 durch eine Betätigung der Antriebseinrichtung 8 in den seitlichen Führungsschienen 7 nach hinten in Richtung hinteres Dachteil 6 verstellt. Der Verdeckbezugstoff 3 ist an den Gestängeteilen 4, 5 gehalten und wird beim Öffnungsvorgang in Falten gelegt.

Im geschlossenen Dachzustand wird der Verdeckbezugstoff 3 straff gespannt, da zum einen der Verdeckbezugstoff an der vorderen Dachkappe 4 befestigt ist, die bei geschlossenem Dach den maximalen Abstand zum hinteren Dachteil 6 aufweist, an welchem das gegenüberliegende Ende des Verdeckbezugstoffes 3 befestigt ist. Zum andern ist im seitlichen Dachbereich jeweils ein Spannseil 9 geführt, das an dSeitenrändern 3a mit dem Verdeckbezugstoff 3 verbunden ist und diesen bei geschlossenem Dach zusätzlich mit Spannung beaufschlagt. Das Spannseil 9 verläuft jeweils entlang der seitlichen Führungsschienen 7 und ist vorteilhafterweise jeweils in einer Dichtungsnut geführt, die an den Führungsschienen angeordnet ist. Das Spannseil 9 wird über ein Spannseilsystem 10 unter Spannung gesetzt, das in den weiteren Figuren im Detail dargestellt ist.

Der Einfachheit halber wird nachfolgend nur ein Spannseilsystem 10 einer Seite des Faltdachs beschrieben. Die gegenüberliegende Seite des Faltdachs ist mit dem entsprechenden Spannseilsystem ausgeführt.

Zur dichtenden Anlage des Seitenrands in der Schließstellung ist das Spannseil 9 mit seinem vorderen Ende an der vorderen Dachkappe fest verankert festgelegt. Zur kraftgesteuerten Einstellung des Spannseils 9 ist dieses an seinem hinteren Ende mittels des Spannseilsystems 10 angebunden.

Das Spannseilsystem 10 ist an einem hinteren karosseriefesten Bauteil des Fahrzeugdachs 1 mittelbar oder unmittelbar gehalten.12

Im gezeigten Ausführungsbeispiel ist das karosseriefeste Bauteil, der im hinteren Dachbereich angeordnete letzte Dachspriegel 5. In der Ansicht der Figur 1 von unten ist der hintere Dachspriegel 5 durch das hintere Dachteil 6 abgedeckt und nicht sichtbar.

In der Figur 1 ist die Fahrtrichtung durch den Pfeil F gekennzeichnet. Die Vorderseite mit V und die Hinterseite bzw- hinten mit H.

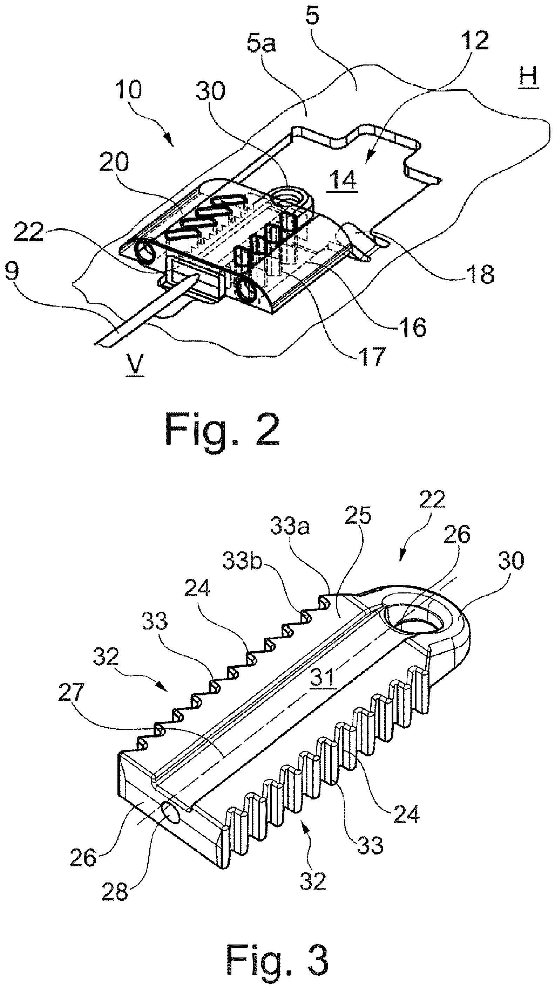

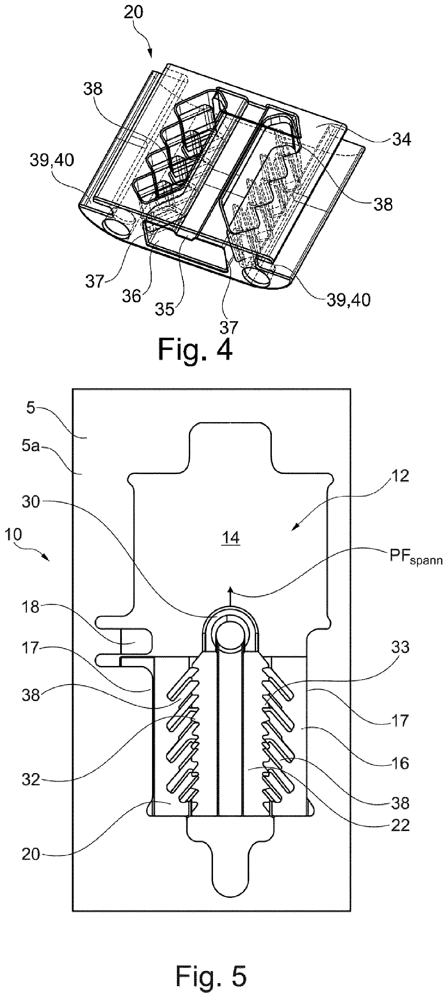

Der hintere Dachspriegel 5 ist in den Figuren 2 und 5 nur in einem Teilausschnitt gezeigt. Der Teilausschnitt zeigt einen seitlichen Endbereich 5a des Dachspriegels. In dem seitlichen Endbereich 5a des Dachspriegels 5 ist ein rechteckiger Ausschnitt 12 als Ausstanzung eingebracht, der einen ersten Bereich 14 mit einer erweiterten Breite B1 und einen in Längsrichtung gesehen daran anschließenden zweiten Bereich 16 mit seitlichen gegenüberliegenden Führungsleisten 17 umfasst. Zwischen erstem und zweitem Bereich ist eine Arretierungslasche 18 ausgebildet, die bei der Montage wie nachfolgend noch näher erläutert in eine Arretierungsposition verbogen werden kann. Die nach oben gebogene Arretierungsposition ist in der Figur 2 gezeigt.

Des Weiteren umfasst das Spannseilsystem 10 eine Rastbasis 20 und ein Rastelement 22. Das Rastelement 22 ist als längliches quaderförmiges Grundelement ausgeführt. Dieses Grundelement ist ein Kunststoff Spritzgussteil. Das Rastelement 22 weist in Längsrichtung verlaufende gegenüberliegende Seitenflächen 24, sowie eine Oberseite 25 und Unterseite sowie in Querrichtung verlaufende Seitenflächen 26 auf. Die Längsachse ist mit der Linie 27 gekennzeichnet. In Längsrichtung ist in dem Grundkörper in etwa mittig eine durchgehende Bohrung 28 ausgebildet. An der in Einbaulage hinteren in Querrichtung verlaufenden Seitenfläche 26 ist an dem Grundkörper eine Öse 30 angespritzt ausgebildet. Auf der Oberseite 25 des Grundkörpers ist eine durchgehende in Längsrichtung verlaufende Führungsnut 31 eingebracht.

Wie es weiterhin aus der Darstellung der Figur 3 zu erkennen ist, sind die in Längsrichtung verlaufenden Seitenflächen 24 mit einer seitlichen Rastverzahnung 32 ausgeführt. Die Rastverzahnung 32 umfasst eine Vielzahl von schräg verlaufenden Rastzähnen 33 die in Längsrichtung gesehen jeweils eine nach vorne gerichtete schräg verlaufende Zahnflanke 33a und eine im Wesentlichen in Querrichtung verlaufende Zahnflanke 33b umfassen. Die seitlichen Rastverzahnungen bilden somit eine tannenbaumartige Struktur.

Das Seilspannsystem 10 umfasst des Weiteren die Rastbasis 20, die an dem karosseriefesten Bauteil 5 fixiert gehalten ist, so dass in der montierten Situation keine Relativbewegung zwischen karosseriefestem Bauteil 5 und Rastbasis 20 möglich ist.

Die Rastbasis 20 weist einen quaderförmigen Grundkörper 34 auf, der zur Aufnahme des Rastelements 22 ein in Längsrichtung verlaufendes durchgehendes Vierkantloch 36 umfasst. Der Grundkörper 34 ist ebenfalls als Kunststoff Spritzgussteil ausgeführt. An zwei gegenüberliegenden Seitenwänden 37 des Vierkantlochs 36 sind korrespondierend zu den schräg verlaufenden Rastzähnen des Rastelements 22 schräg verlaufende Federzungen 38 ausgebildet. Die Federzungen 38 kommen in der montierten Situation mit den Rastzähnen des Rastelements 22 in Eingriff. Demnach wechseln sich in der montierten Situation jeweils ein Rastzahn und eine Federzunge in Längsrichtung gesehen ab. Durch die schräge Ausbildung der Rastzähne und der Federzungen ist eine Relativbewegung zwischen Rastelement und Rastbasis 20 nur in einer Richtung möglich. Diese Bewegungsrichtung ist in der Figur 5 mit dem Pfeil PFSpann angezeigt.

Durch die Teilung der Rastverzahnung und der Teilung der Federzungen und der Eingriff der beidseits angeordneten Rastzähne in die korrespondierenden an den Seitenwänden 37 ausgebildeten Federzungen kommen durch den Teilungsversatz immer zwei gegenüberliegende Federzungen alle 0,4 mm bei einer Relativbewegung zum Eingriff.

Wie es weiterhin aus der Darstellung des Einzelteils in der Figur 4 zu ersehen ist, ist in Längsrichtung verlaufend im Bereich des Vierkantlochs mittig an der oberen Begrenzungswand des Vierkantlochs 36 ein zur Führungsnut 31 des Rastelements 22 korrespondierender Führungssteg 35 angeformt. Des Weiteren sind die in Längsrichtung verlaufenden Seitenbereiche 39 des Grundkörpers 34 mit durchgehenden Führungsnuten 40 ausgeführt. Die Führungsnuten 40 sind korrespondierend zu den Führungsleisten 17 des karosseriefesten Elements 5 ausgebildet.

Die Figuren 2 und 5 zeigen die montierte Situation des Spannseilsystems 10.

Das Rastelement 22 wird zunächst in das Vierkantloch der Rastbasis 20 eingeschoben. Als Einschiebehilfe dient die Führungsnut des Rastelements die in den Führungssteg der Rastbasis eingeführt wird. Wie dies obenstehend bereits erläutert ist, ist dies nur in einer Richtung möglich. Die Rastverzahnung des Rastelements ist dabei in formschlüssigem Eingriff mit den Rastzungen der Rastbasis.

Des Weiteren ist in der montierten Situation die Rastbasis 20 in dem karosseriefesten Element 5 eingefügt arretiert gehalten. Bei der Montage der Rastbasis 20 wird der quaderförmige Grundkörper in den ersten Bereich 14 der Ausnehmung eingesetzt und in Längsrichtung nach vorne mittels seiner seitlichen Führungsnuten 40 in die korrespondierenden Führungsleisten 17 eingeschoben. In dieser Montageposition verläuft die Arretierungslasche 18 fluchtend zu den Führungsleisten 17, so dass ein Einschieben der Rastbasis 20 möglich ist.

In der eingeschobenen Position wird dann die Arretierungslasche 18 in Hochrichtung nach oben verbogen, so dass der Grundkörper in Bezug auf das karosseriefeste Bauteil 5 nicht mehr relativverschiebbar ist (Arretierungsposition).

Nach der Montage der Rastbasis und des Rastelements wird abschließend das Spannseil 9 von vorne nach hinten durch die Bohrung 28 hindurchgeführt und mit seinem hinteren Endbereich an der an dem Grundkörper angespritzten Öse 30 fixiert. In der Figur 2 ist die montierte Situation ohne Fixierung des Spannseils 9 an der Öse gezeigt.

Bei der Fixierung des Spannseils wird die gewünschte Seilspannung zunächst voreingestellt. Eine finale Einstellung der Seilspannung wird bei fertig montiertem Faltdach kraftgesteuert vorgenommen. Hierfür wird das hintere Ende des an der Öse fixierten Spannseils über die in Längsrichtung verlaufenden Seitenbereiche des Faltdachs nach außen geführt und eine definierte Zugkraft wird eingeleitet. Durch diese Krafteinleitung wird das Rastelement 22 in der Rastbasis 20 gemäß der Rastteilung verschoben. Bei Erreichen der gewünschten Seilspannung verrastet die Rastverzahnung formschlüssig in der Rastbasis, wobei die Rastzähne alternierend mit den Federzungen zur Anlage kommen.

Durch die feine Rastteilung der Rastverzahnung kann eine genaue Einstellung der Seilspannung sowie auch eine nachträgliche Anpassung der Seilspannung einfach ohne weiteres Werkzeug erfolgen.

### Bezugszeichenliste

- 1: Fahrzeugdach
- 2: Faltdach
- 3: Verdeckbezugstoff
- 4: vordere Dachkappe
- 5: Dachspriegel
- 6: hinteres Dachteil
- 7: Führungsschienen
- 8: Antriebseinrichtung
- 9: Spannseil
- 10: Spannseilsystem
- 12: rechteckiger Ausschnitt
- 14: erster Bereich
- 16: zweiter Bereich
- 17: Führungsleisten
- 18: Arretierungslasche
- 20: Rastbasis
- 22: Rastelement
- 24: Seitenflächen
- 25: Oberseite
- 26: Seitenflächen
- 28: Bohrung
- 30: Öse
- 31: Führungsnut
- 32: Rastverzahnung
- 33: Rastzähne
- 33a: schräge Zahnflanke
- 33b: Zahnflanke
- 34: Grundkörper
- 35: Führungssteg
- 36: Vierkantloch
- 37: Seitenwänden
- 38: Federzungen
- 39: Seitenbereiche
- 40: Führungsnuten

## Patentansprüche

1. Fahrzeugdach mit einem öffnungsfähigen Faltdach (2), mit einem das Faltdach (2) im geschlossenen Zustand spannenden Spannseil (9), das einenends an einem vorderen Dachteil (4) des Faltdaches (2) fest verankert und anderenends an einem hinteren, karosseriefesten Bauteil zur Einstellung der Seilspannung mittels eines Spannseilsystems (10) längeneinstellbar gehalten ist,
wobei das Spannseilsystem (10) eine an dem karosseriefesten Bauteil fest verankerte Rastbasis (20) und ein Rastelement (22) umfasst, wobei das hintere Ende des Spannseils (9) fest verankert an dem Rastelement (22) gehalten ist, und wobei zwischen Rastbasis (20) und Rastelement (22) in Längsrichtung eine mehrstufige einstellbare Verrastung ausgebildet ist derart, dass das Rastelement (22) relativ zu der Rastbasis (20) verstellbar ist und das Rastelement (22) in der eingestellten Relativposition an der Rastbasis (20) formschlüssig verrastet gehalten ist, wobei das Rastelement (22) relativ zur Rastbasis (20) nur in einer Längsrichtung verstellbar ist, und die Längsrichtung die Fahrzeuglängsrichtung ist, **dadurch gekennzeichnet,**
**dass** das Rastelement (22) in Bezug auf die Rastbasis (20) nur in Längsrichtung nach hinten verstellbar ist, und dass die mehrstufig einstellbare Verrastung durch eine Rastverzahnung (32) am Rastelement (22) und korrespondierende Federzungen (38) an der Rastbasis (20) ausgebildet wird, und dass das Rastelement (22) als quaderförmiges Grundelement mit in Längsrichtung verlaufenden gegenüberliegenden Seitenflächen (24), sowie eine Oberseite (25) und Unterseite sowie in Querrichtung verlaufende Seitenflächen (26), vorzugsweise als Kunststoff Spritzgussteil ausgeführt ist, wobei die Rastverzahnung (32) an den Seitenflächen (24) ausgebildet ist, und dass die Rastbasis (20) einen quaderförmigen Grundkörper (34) aufweist, der zur Aufnahme des Rastelements (22) eine in Längsrichtung verlaufendes durchgehendes Vierkantloch (36) umfasst, wobei der Grundkörper (34) vorzugsweise als Kunststoff Spritzgussteil ausgeführt ist, und dass die zur Rastverzahnung korrespondierenden Federzungen (38) der Rastbasis (20) an zwei gegenüberliegenden in Längsrichtung verlaufenden Seitenwänden des Vierkantlochs (36) ausgeführt sind.

2. Fahrzeugdach nach Anspruch 1, **dadurch gekennzeichnet, dass** die verrastete Halterung zwischen Rastelement (22) und Rastbasis (20) derart ausgestaltet ist, dass die Halterung nur über eine auf das Spannseil (9) wirkende Zugkraft aufhebbar und über die Zugkraft eine Relativbewegung in Längsrichtung zwischen Rastelement (22) und Rastbasis (20) zur Einstellung der Spannseillänge und Erhöhung der Seilspannung bewirkbar ist und das Rastelement (22) in der verstellten Relativposition an der Rastbasis (20) formschlüssig verrastbar ist.

3. Fahrzeugdach nach Anspruch 1, **dadurch gekennzeichnet, dass** das Faltdach (2) eine Vielzahl von Gestängeteilen mit einer vorderen Dachkappe (4) und in Querrichtung sich erstreckenden Dachspriegeln (5) umfasst, und dass das karosseriefeste Bauteil ein hinterer Dachspriegel (5) ist.

4. Fahrzeugdach nach Anspruch 3, **dadurch gekennzeichnet, dass** der hintere Dachspriegel (5) endseitig zur karosseriefesten Halterung der Rastbasis (20) mit einer Ausstanzung und zumindest einer Arretierungslasche (18) ausgeführt ist, wobei die Arretierungslasche (18) in eine Montageposition und eine Arretierungsposition verstellbar ist.

5. Fahrzeugdach nach einem der vorangehenden Ansprüche, **dadurch gekennzeichnet, dass** die Rastverzahnung (32) eine Vielzahl von schräg verlaufenden Rastzähnen (33) die in Längsrichtung gesehen jeweils eine nach vorne gerichtete schräg verlaufende Zahnflanke (33a) und eine im Wesentlichen in Querrichtung verlaufende Zahnflanke (33b) umfassen.

6. Fahrzeugdach nach einem der vorangehenden Ansprüche, **dadurch gekennzeichnet, dass** das Rastelement (22) mittig in Längsrichtung eine durchgehende Bohrung (28) aufweist.

7. Fahrzeugdach nach einem der vorangehenden Ansprüche, **dadurch gekennzeichnet, dass** an der in Einbaulage hinteren Seitenfläche (26) an dem Grundkörper eine Öse zur Anbindung des Spannseils (9) angeordnet, vorzugsweise angespritzt ist.

8. Fahrzeugdach nach einem der vorangehenden Ansprüche, **dadurch gekennzeichnet, dass** die Rastbasis (20) einen als Einschiebehilfe angeformten zu einer Führungsnut des Rastelements (22) korrespondierenden Führungssteg (35) aufweist.

9. Fahrzeugdach nach Ansprüche 6 und 7, **dadurch gekennzeichnet, dass** in der montierten Situation das Spannseil (9) ausgehend von der vorderen in Querrichtung verlaufenden Seitenfläche (26) durch die Bohrung (28) des Rastelements (22) verläuft und an der Öse (30) fest angebunden ist.

## Claims

1. A vehicle roof with an openable collapsible roof (2), having a tensioning cord (9) which tensions the collapsible roof (2) in the closed state and at one end is fixedly anchored to a front roof part (4) of the collapsible roof (2) and at the other end is held on a rear component, which is fixed to the bodywork, so as to be length-adjustable for adjusting the cord tension by means of a tensioning cord system (10),
wherein the tensioning cord system (10) comprises a latching base (20), which is fixedly anchored to the component which is fixed to the bodywork, and a latching element (22), the rear end of the tensioning cord (9) being held so as to be fixedly anchored to the latching element (22), and a latching mechanism which is adjustable in multiple stages being configured between the latching base (20) and the latching element (22) in the longitudinal direction in such a manner that the latching element (22) is adjustable relative to the latching base (20), and the latching element (22) in the adjusted relative position is held so as to be latched in a form-fitting manner to the latching base (20),
wherein the latching element (22) is adjustable relative to the latching base (20) only in one longitudinal direction; and the longitudinal direction is the vehicle longitudinal direction; **characterized in that**
the latching element (22) is adjustable relative to the latching base (20) only in the longitudinal direction toward the rear; and wherein the latching mechanism which is adjustable in multiple stages is formed by a latching toothing (32) on the latching element (22) and corresponding flexible tongues (38) on the latching base (20); and wherein the latching element (22), preferably as a plastic injection-molded part, is embodied as a cuboid base element with mutually opposite lateral faces (24) which run in the longitudinal direction, and an upper side (25) and a lower side, and lateral faces (26) which run in the transverse direction, the latching toothing (32) being configured on the lateral faces (24); and wherein the latching base (20) has a cuboid main body (34) which for receiving the latching element (22) comprises a continuous square hole (36) running in the longitudinal direction, the main body (34) preferably being embodied as a plastic injection-molded part; and wherein the flexible tongues (38) of the latching base (20) that communicate with the latching toothing are embodied on two mutually opposite lateral walls of the square hole (36) which run in the longitudinal direction.

2. The vehicle roof as claimed in claim 1, **characterized in that** the latched mounting between the latching element (22) and the latching base (20) is designed in such a manner that the mounting is able to be cancelled only by way of a tensile force acting on the tensioning cord (9), and a relative movement in the longitudinal direction between the latching element (22) and the latching base (20) for adjusting the tensioning cord length and increasing the cord tension is able to be effected by way of the tensile force, and the latching element (22) in the adjusted relative position is able to be latched in a form-fitting manner to the latching base (20).

3. The vehicle roof as claimed in claim 1, **characterized in that** the collapsible roof (2) comprises a multiplicity of linkage parts having a front roof cowl (4) and roof bows (5) extending in the transverse direction; and wherein the component which is fixed to the bodywork is a rear roof bow (5).

4. The vehicle roof as claimed in claim 3, **characterized in that** the rear roof bow (5) at the end side, for fixedly mounting the latching base (20) to the bodywork, is embodied with a punch-out and at least one locking tab (18), the locking tab (18) being adjustable to an assembling position and a locking position.

5. The vehicle roof as claimed in one of the preceding claims, **characterized in that** the latching toothing (32) comprises a multiplicity of obliquely running latching teeth (33) which, when viewed in the longitudinal direction, have in each case an obliquely running tooth flank (33a) which is oriented toward the front, and a tooth flank (33b) which runs substantially in the transverse direction.

6. The vehicle roof as claimed in one of the preceding claims, **characterized in that** the latching element (22) has a continuous bore (28) in the longitudinal direction, which is centric.

7. The vehicle roof as claimed in one of the preceding claims, **characterized in that** an eyelet for attaching the tensioning cord (9) is disposed, preferably integrally molded, on that lateral face (26) on the main body that is at the rear in the installed position.

8. The vehicle roof as claimed in one of the preceding claims, **characterized in that** the latching base (20) has an integrally molded guide web (35) which as an insertion aid communicates with a guide groove of the latching element (22).

9. The vehicle roof as claimed in claims 6 and 7, wherein the tensioning cord (9) in the assembled situation, proceeding from the front lateral face (26) that runs in the transverse direction, runs through the bore (28) of the latching element (22) and is fixedly attached to the eyelet (30).

## Revendications

1. Toit de véhicule avec un toit pliant (2) ouvrant, avec un câble tendeur (9) tendant le toit pliant (2) à l'état fermé, qui est ancré fixement à une extrémité sur une partie de toit avant (4) du toit pliant (2) et qui est maintenu réglable en longueur au moyen d'un système de câble tendeur (10) à l'autre extrémité sur un composant arrière solidaire de la carrosserie pour régler la tension du câble,
le système de câble tendeur (10) comprenant une base d'encliquetage (20) ancrée fixement sur le composant solidaire de la carrosserie et un élément d'encliquetage (22), l'extrémité arrière du câble tendeur (9) étant maintenue ancrée fixement sur l'élément d'encliquetage (22), et un encliquetage réglable à plusieurs niveaux étant réalisé dans la direction longitudinale entre la base d'encliquetage (20) et l'élément d'encliquetage (22) de telle sorte que l'élément d'encliquetage (22) est réglable par rapport à la base d'encliquetage (20) et l'élément d'encliquetage (22) est maintenu encliqueté par complémentarité de forme sur la base d'encliquetage (20) dans la position relative réglée, l'élément d'encliquetage (22) n'étant réglable par rapport à la base d'encliquetage (20) que dans une direction longitudinale, et la direction longitudinale étant la direction longitudinale du véhicule, **caractérisé en ce que**
l'élément d'encliquetage (22) est réglable vers l'arrière par rapport à la base d'encliquetage (20) uniquement dans la direction longitudinale, et **en ce que** l'encliquetage réglable à plusieurs niveaux est réalisé par une denture d'encliquetage (32) sur l'élément d'encliquetage (22) et des languettes élastiques (38) correspondantes sur la base d'encliquetage (20), et **en ce que** l'élément d'encliquetage (22) est conçu sous la forme d'un élément de base parallélépipédique avec des surfaces latérales (24) opposées s'étendant dans la direction longitudinale, ainsi qu'un côté supérieur (25) et un côté inférieur ainsi que des surfaces latérales (26) s'étendant dans la direction transversale, de préférence sous forme de pièce en matière plastique moulée par injection, la denture d'encliquetage (32) étant réalisée sur les surfaces latérales (24), et **en ce que** la base d'encliquetage (20) présente un corps de base (34) parallélépipédique qui comprend un trou carré (36) continu s'étendant dans la direction longitudinale pour recevoir l'élément d'encliquetage (22), le corps de base (34) étant de préférence conçu sous forme de pièce en matière plastique moulée par injection, et **en ce que** les languettes élastiques (38) de la base d'encliquetage (20) correspondant à la denture d'encliquetage sont conçues sur deux parois latérales opposées du trou carré (36) s'étendant dans la direction longitudinale.

2. Toit de véhicule selon la revendication 1, **caractérisé en ce que** la fixation encliquetée entre l'élément d'encliquetage (22) et la base d'encliquetage (20) est conçue de telle sorte que la fixation ne peut être soulevée que par une force de traction agissant sur le câble tendeur (9) et qu'un mouvement relatif dans la direction longitudinale entre l'élément d'encliquetage (22) et la base d'encliquetage (20) peut être provoqué par la force de traction pour régler la longueur du câble tendeur et augmenter la tension du câble, et que l'élément d'encliquetage (22) peut être encliqueté par complémentarité de forme sur la base d'encliquetage (20) dans la position relative réglée.

3. Toit de véhicule selon la revendication 1, **caractérisé en ce que** le toit pliant (2) comprend une pluralité d'éléments de tringlerie avec une calotte de toit avant (4) et des arceaux de toit (5) s'étendant dans la direction transversale, et **en ce que** le composant solidaire de la carrosserie est un arceau de toit arrière (5).

4. Toit de véhicule selon la revendication 3, **caractérisé en ce que** l'arceau de toit arrière (5) est conçu avec une découpe et au moins une patte d'arrêt (18) du côté de l'extrémité pour la fixation solidaire de la carrosserie de la base d'encliquetage (20), la patte d'arrêt (18) étant réglable dans une position de montage et une position d'arrêt.

5. Toit de véhicule selon l'une quelconque des revendications précédentes, **caractérisé en ce que** la denture d'encliquetage (32) comprend une pluralité de dents d'encliquetage (33) s'étendant en oblique qui, vues dans la direction longitudinale, comprennent chacune un flanc de dent (33a) s'étendant en oblique vers l'avant et un flanc de dent (33b) s'étendant essentiellement dans la direction transversale.

6. Toit de véhicule selon l'une quelconque des revendications précédentes, **caractérisé en ce que** l'élément d'encliquetage (22) présente un alésage traversant (28) au centre dans la direction longitudinale.

7. Toit de véhicule selon l'une quelconque des revendications précédentes, **caractérisé en ce qu'**un œillet pour le rattachement du câble tendeur (9) est agencé, de préférence moulé par injection, sur la surface latérale (26) arrière en position de montage sur le corps de base.

8. Toit de véhicule selon l'une quelconque des revendications précédentes, **caractérisé en ce que** la base d'encliquetage (20) présente une nervure de guidage (35) formée en tant qu'aide à l'insertion et correspondant à une rainure de guidage de l'élément d'encliquetage (22).

9. Toit de véhicule selon les revendications 6 et 7, **caractérisé en ce que**, dans la situation montée, le câble tendeur (9) s'étend à partir de la surface latérale avant (26) s'étendant dans la direction transversale, à travers l'alésage (28) de l'élément d'encliquetage (22) et est fixement rattaché à l'œillet (30).
